# EUROPEAN PATENT APPLICATION

(11) **EP 2 210 719 A1**
(43) Date of publication of application: **28.07.2010**
(21) Application number: 10151210.1
(22) Date of filing: 20.01.2010
(51) Int. Cl.: B27B 5/065, B23D 47/02, B23D 47/04, B27C 9/04, B27M 1/08, B27M 3/00

(54) **Method for the production of components made of wood or plastic**

(30) Priority: 21.01.2009 IT BO20090024
(71) Applicant: BIESSE S.p.A., Pesaro (IT)
(72) Inventor: Lattanzi, Lorenzo, 61100 Pesaro (IT)
(74) Representative: Jorio, Paolo

(57) **Abstract**

A method for the production of components (16a, 16b) made of wood or plastic in a cutting machine, wherein the panel (2) is fed through a cutting station (8) having two supporting blocks (21a, 21b) mobile with respect to each other for defining two channels (27, 28) of different width, one of which is slidingly engaged by a cutting blade (12) adapted to butt-cut a front face of the panel (2) and separate at least one component (16a, 16b) from the panel (2) itself, and the other is slidingly engaged by an operating unit (17) adapted to finish the front face of the panel (2) and a rear face of the component (16a, 16b).

## Description

The present invention relates to a method for the production of components made of wood or plastic.

In the field of producing components made of wood or plastic, it is known to provide a cutting machine comprising a base defining a substantially horizontal supporting plane for at least one panel of wood or the like; a feeding device for feeding the panel along the supporting plane and in a given first direction; and a cutting blade protruding, in use, over the supporting plane and mobile in a second direction transversal to the first direction for separating at least one component from the panel.

The components made by the cutting machine are generally transferred to an edging machine to be ground and edged.

As the known cutting machines of the above-described type are shaped only for cutting the panel into at least two components, each edging machine should have a milling, skiving, or grinding assembly, adapted to finish the side faces of the components for allowing subsequent edging.

Therefore, the production of components made of wood or plastic implies the use of a relatively complex and costly system.

It is an object of the present invention to provide a method for the production of components made of wood or plastic which is free from the above-described drawbacks and which is simple and cost-effective to be implemented.

According to the present invention, a method for the production of components made of wood or plastic is provided as claimed in the appended claims.

The present invention will now be described with reference to the accompanying drawings, which illustrate a non-limitative embodiment thereof, in which:
figure 1 is a schematic perspective view of a preferred embodiment of the cutting machine of the present invention;
figure 2 is a schematic perspective view of a first detail of the cutting machine in figure 1;
figures 3 and 4 are two schematic perspective views of a second detail of the cutting machine in figure 1 shown in two different operating positions; and
figure 5 schematically shows the operation of the cutting machine in figure 1.

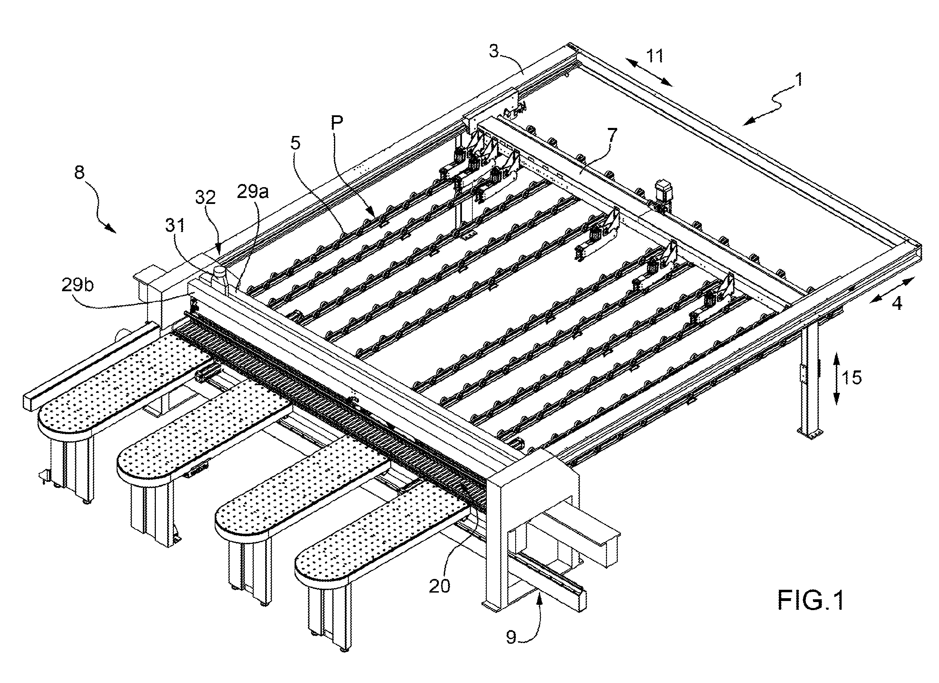

With reference to figure 1, numeral 1 indicates as a whole a cutting machine for cutting panels 2 made of wood or plastic having a substantially parallelepiped shape with a substantially rectangular section.

Machine 1 comprises an elongated base 3, which extends in a horizontal direction 4, and is provided with a roller supporting device 5 of the known type, which defines a substantially horizontal supporting plane P for a pack 6 of overlaying panels 2, and cooperates with a feeding device 7 of known type adapted to feed the pack 6 of panels 2 in direction 4 and through a cutting station 8 arranged at one end of base 3.

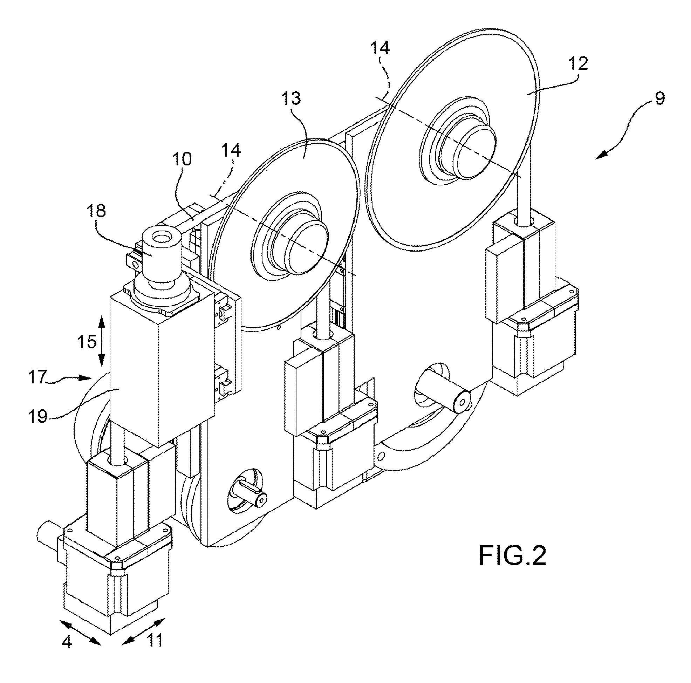

As shown in figure 2, station 8 is provided with a cutting assembly 9 comprising a carriage 10, which extends underneath the plane P, is coupled to the base 3 in a known manner to carry out rectilinear movements in a horizontal direction 11 transversal to direction 4 with respect to the base 3 and under the bias of an actuating device (known and not shown), and supports a cutting blade 12 and a engraver 13 mounted on the carriage 10 to rotate about respective longitudinal axes 14 parallel to one another and to direction 4 itself.

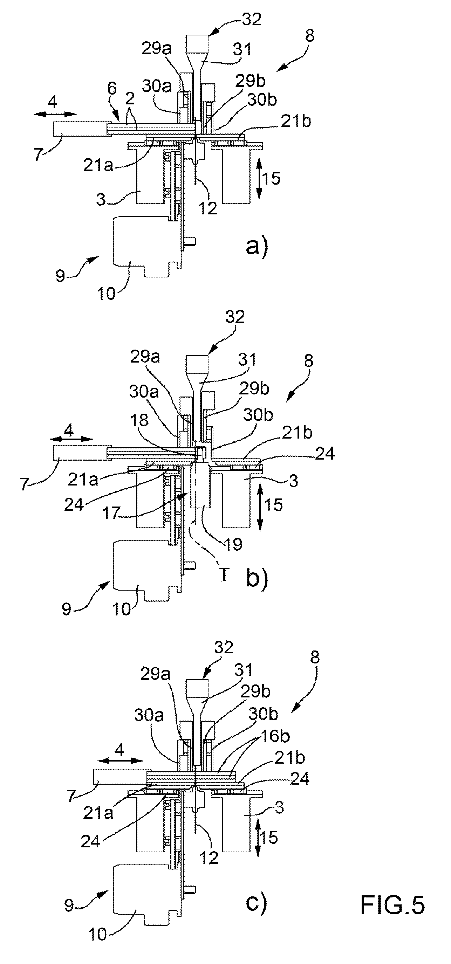

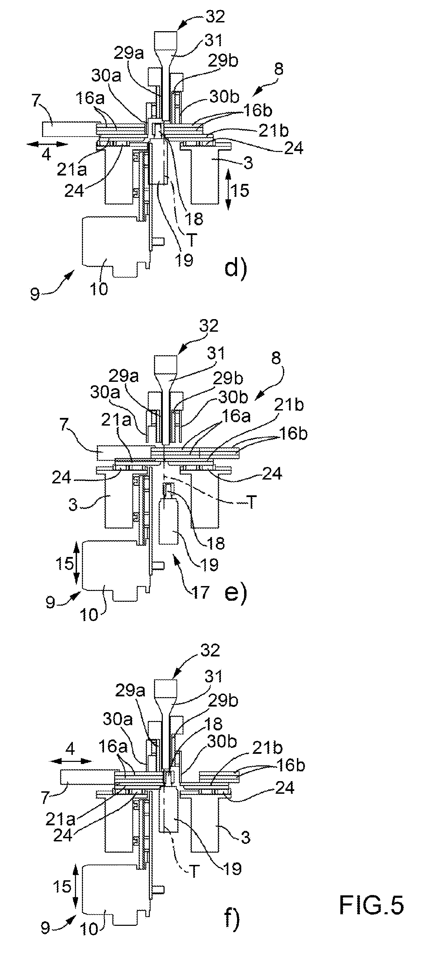

Blade 12 and engraver 13 are coupled in a known manner to the carriage 10 to carry out rectilinear movements in a vertical direction 15 orthogonal to directions 4 and 11 with respect to the carriage 10, between corresponding lowered resting positions, in which blade 12 and engraver 13 are arranged underneath the plane P to allow the panels 2 to be fed along the plane P, and corresponding raised operating positions, in which blade 12 and engraver 13 protrude over the plane P itself to separate a component 16 (figure 5) from each panel 2 of pack 6.

Furthermore, blade 12 and engraver 13 are moved by the carriage 10 in direction 11 and along a cutting plane T orthogonal to direction 4 with a reciprocating rectilinear motion comprising an outward stroke, in which the engraver 13, arranged in front of blade 12 in the feeding direction 11 of the carriage 10, engraves the lower panel 2 of pack 6 and the blade 12 cuts the panels 2 of the pack 6 itself, and a return stroke.

Carriage 10 further supports an operating unit 17 comprising, in this case, a milling tool 18 mounted to the output shaft of an electrospindle 19, which extends in direction 15, and is coupled to the carriage 10 to carry out rectilinear movements with respect to the carriage 10 in the direction 15 between a lowered resting position, in which the tool 18 is arranged under the plane P to allow the panels 2 to be fed along the plane P, and a raised operating position, in which the tool 18 protrudes over the plane P itself to carry out a milling operation on the panels 2 and/or components 16. Furthermore, the electrospindle 19 is coupled to the carriage 10 to carry out rectilinear movements in direction 4 with respect to the carriage 10, so as to selectively control the position of the tool 18 in the direction 4 itself.

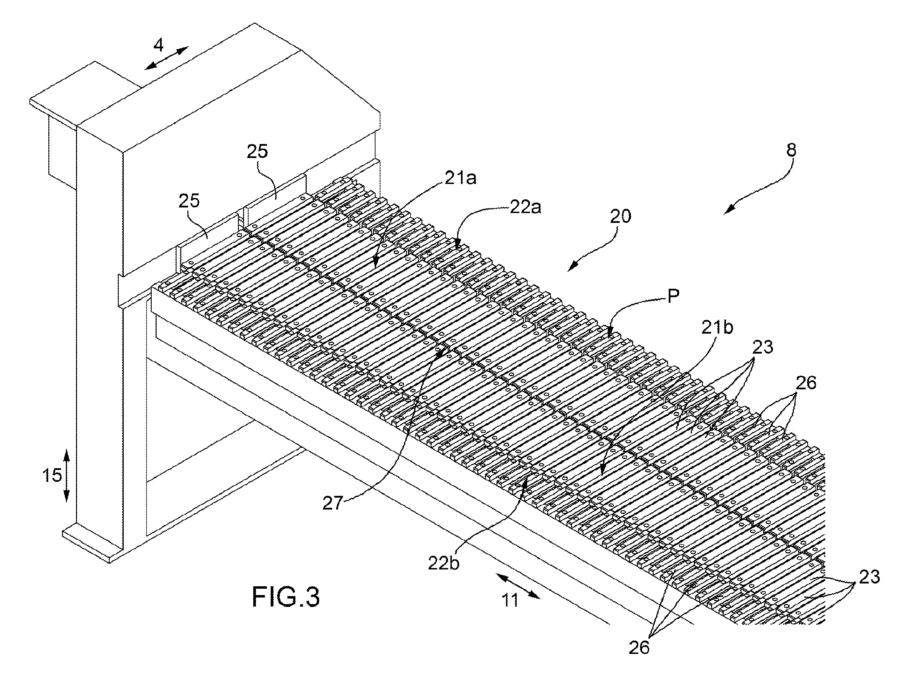

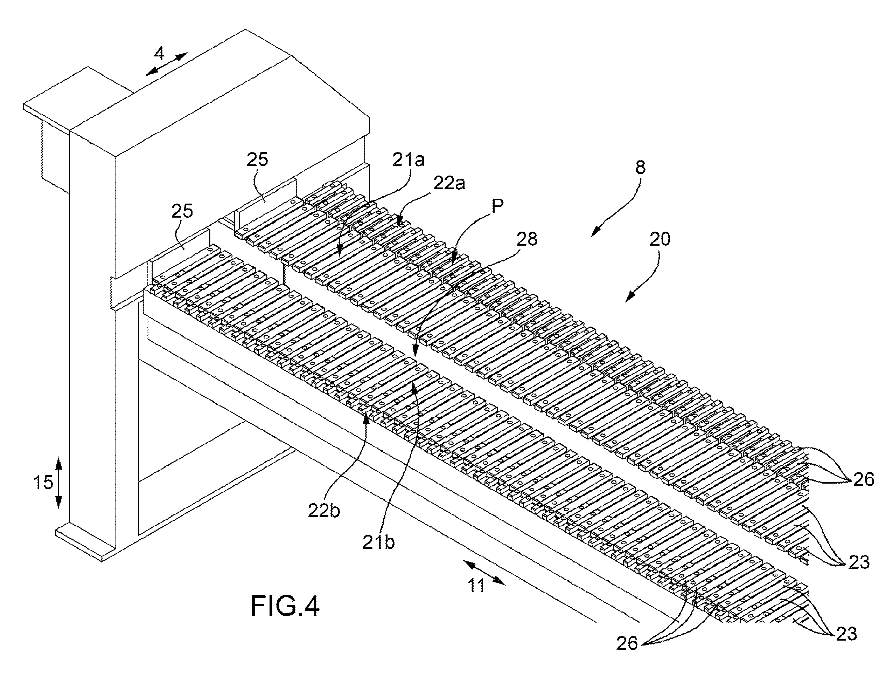

With reference to figures 3 and 4, the pack 6 of panels 2 is supported at the cutting station 8 by a supporting unit 20 comprising two bar devices 21a, 21b arranged on opposite sides of the plane T in direction 4 and two bar devices 22a, 22b arranged on opposite sides of the devices 21a, 21b in the direction 4 itself.

Each device 21a, 21b comprises a plurality of bars 23 parallel to one another, which extend in direction 4, are coplanar to one another and to plane P, are aligned with one another in direction 11, and are fixed to a slide 24 (figure 5), which extends under the plane P in the direction 11 itself, further supports a stopping element 25 adapted to allow the panels 2 to be correctly positioned in direction 11, and is slidingly coupled to base 3 to carry out rectilinear movements in direction 4 with respect to the base 3 itself.

Each device 22a, 22b comprises a plurality of bars 26 parallel to one another, which extend in direction 4, are fixed to the base 3 so as to be coplanar to one another and to plane P, are aligned with one another in direction 11, and are offset with respect to the bars 23 of the corresponding device 21a, 21b in direction 11.

Bars 23 and stopping element 25 of each device 21a, 21b are selectively moved by the corresponding slide 24 between an advanced position (figure 3), in which the bars 23 define a first channel 27 adapted to be slidingly engaged by blade 12 and engraver 13, and a retracted position (figure 4), in which the bars 23 are arranged between the bars 26 of the corresponding device 22a, 22b to define a second channel 28, which is wider as measured parallelly to direction 4 than the channel 27, also measured parallelly to direction 4, and is adapted to be slidingly engaged by the tool 18.

As shown in figure 5, the cutting station 8 further comprises a pair of pressers 29a, 29b, which extend in direction 11 over the devices 21a and 21b, respectively, are arranged on opposite sides of plane T in direction 4, and are independently mobile between corresponding lowered positions, in which the pressers 29a, 29b block panels 2 and/or components 6 on the plane P, and corresponding raised resting positions.

Moreover, the cutting station 8 is provided with a pair of containing bulkheads 30a, 30b, which extend in direction 11 and over the devices 21a and 21b, respectively, are arranged on opposite sides of the pressers 29a, 29b in direction 4, and are independently mobile between corresponding lowered operating positions, in which the bulkheads 30a, 30b are arranged substantially in contact with panels 2 or components 6 or corresponding bars 23 to avoid dispersion of chips and/or processing scraps, and corresponding raised resting positions.

Furthermore, the cutting assembly 9 cooperates with a suction pipe 31, which extends towards upwards between the pressers 29a, 29b, defines part of an aspirating pneumatic device 32, and is mobile in use in direction 11 with the same law of motion as the carriage 10 to correctly aspirate chips and/or processing scraps generated by the cutting assembly 9 itself.

The operation of machine 1 will now be illustrated with reference to figure 5, assuming the cutting of each panel 2 into two components 16, and from a moment when (figure 5a):
the pack 6 of panels 2 is fed to the cutting station 8;
the pressers 29a, 29b and the bulkheads 30a, 30b are arranged in their lowered operating positions; and
the bars 23 and the stopping elements 25 of the devices 21a, 21b are arranged in their advanced positions.

Blade 12 and engraver 13 are firstly raised in direction 15, are then moved along the channel 27 in direction 11 for butt-cutting the panels 2 of pack 6 (figure 5a), and are finally moved again to their lowered resting positions.

Once the presser 29b has been raised and the bars 23 of the device 21b have been moved to their retracted position, the electrospindle 19 is firstly moved in direction 4 to arrange the tool 18 substantially tangent to the plane T and to a front face of the pack 6, is then raised in direction 15, and is finally moved in direction 11 to allow the tool 18 to engage the channel 28 and to mill and finish the front face of pack 6 (figure 5b).

As shown in figure 5c, once the electrospindle 19 has been lowered and the presser 29a and the bulkheads 30a, 30b have been raised, the bars 23 of the device 21b are moved again to their advanced position, pack 6 is fed through station 8 in direction 4, the pressers 29a, 29b and the bulkheads 30a, 30b are lowered, and the blade 12 and the engraver 13 are firstly raised in direction 15 and are then moved along the channel 27 in direction 11 to divide each panel 2 into two components 16 (hereinafter indicated by numerals 16a and 16b).

At this point, the blade 12 and the engraver 13 are lowered, the presser 29a and the bulkhead 30a are raised, the components 16a are retracted and moved away from components 16b and plane T by means of the feeding device 7, the bars 23 of device 21a are moved to their retracted position, the bulkhead 30a is lowered again, and the electrospindle 19 is firstly moved in direction 4 to arrange the tool 18 substantially tangent to plane T and to the rear faces of the components 16b, is then raised in direction 15, and is finally moved in direction 11 to allow the tool 18 to engage the channel 28 and to mill and finish the rear faces of the components 16b themselves (figure 5d).

The presser 29b and the bulkheads 30a, 30b are then raised, the electrospindle 19 is lowered, the bars 23 of device 21a are moved to their advanced position, and the components 16a are fed in direction 4 by means of the feeding device 7 for disengaging the components 16b from the cutting station 8 (figure 5e).

With reference to figure 5f, the components 16a are retracted again in direction 4 to move the front faces thereof on plane T, the bars 23 of device 21b are moved to their retracted position, the presser 29a and the bulkheads 30a, 30b are lowered, and the electrospindle 19 is firstly moved in direction 4 to arrange the tool 18 substantially tangent to plane T and the front faces of the components 16a, is then raised in direction 15, and is finally moved in direction 11 to allow the tool 18 to engage the channel 28 and to mill and finish the front faces of the components 16a themselves.

Finally, the processing of the components 16a is completed by butt-cutting and by milling and finishing the rear faces of the components 16a themselves.

With regards to the above, it is worth specifying that once the processing operations described above have been ended, each component 16a, 16b may be rotated by 90° and inserted back into the same machine 1 or in further machines 1 to butt-cut and mill/finish the two remaining faces of the component 16a, 16b itself.

According to variants (not shown):
the operating unit 17 comprises for example a labeling device and/or drilling device and/or an edging device and/or an inserter to insert ironmongery elements into the components 16a, 16b;
the slides 24 are eliminated and replaced by corresponding supporting plates hinged to the base 3 to rotate with respect to the base 3 itself about corresponding fulcrum axes parallel to direction 11 between two operating positions, in which the bars 23 define channel 27 and channel 28, respectively;
the carriage 10 is provided with a suction pipe alternative or auxiliary to the pipe 31 and adapted to aspirate chips and/or processing scraps from the bottom;
the tool 18 is provided with an adjustable baffle to divert the chips and/or processing scraps upwards and/or downwards;
the combination of movements of the pack 6 in direction 4 and of the tool 18 in direction 11 allows to carry out a shaped cutting of panels 2 and/or components 16a, 16b;
the cutting station 8 is provided with a tool stock and with a tool-change device for transferring blades and/or tools and/or processing aggregates between the tool stock and the carriage 10 and the electrospindle 19; and
the milling tool 18 is eliminated and replaced for example by a skiving or grinding tool.

The width of channel 28 allows to use a milling tool 18 having a relatively large diameter adapted to relatively quickly mill the faces of components 16a, 16b.

## Claims

1. A method for the production of components (16a, 16b) made of wood or plastic in a cutting machine comprising a feeding device (7) for moving at least one panel (2) made of wood or plastic in a given direction (4) and through a cutting station (8), a cutting blade (12) mobile along a cutting plane (T) substantially orthogonal to the direction (4), and two supporting blocks (21a, 21b), which define a supporting plane (P) for the panel (2), are arranged on opposite sides of the cutting plane (T) in the direction (4), and are further arranged in a first operating position in which the supporting blocks (21a, 21b) define a first channel (27) slidingly engaged by the cutting blade (12); the method comprising the steps of:
selectively feeding the panel (2) through the cutting station (8); and
moving the cutting blade (12) along the first channel (27) to butt-cut a front face of the panel (2) and to separate at least one component (16a, 16b) from the panel (2) itself;
and being **characterized in that** it further comprises the steps of:
moving the supporting blocks (21a, 21b) to a second operating position, in which the supporting blocks (21a, 21b) are arranged so as to define a second channel (28) having a width, measured in the direction (4), wider than the width of the first channel (27) also measured in the direction (4); and
moving along the second channel (28) an operating unit (17) adapted to finish the front face of the panel (2) and a rear face of the component (16a, 16b).

2. A method according to claim 1, wherein the operating unit (17) comprises a milling tool and/or a skiving tool and/or a grinding tool.

3. A method according to claim 1 or 2 and further comprising the step of:
moving an edging assembly of the front face of the panel (2) and of the rear face of the component (16a, 16b) along the second channel (28).

4. A method according to any one of the preceding claims, further comprising the step of:
moving a first drilling assembly of the front face of the panel (2) and of the rear face of the component (16a, 16b) along the second channel (28).

5. A method according to any one of the preceding claims, further comprising the step of:
moving a second drilling assembly of a lower face of the panel (2) and/or of a lower face of the component (16a, 16b) along the second channel (28).

6. A method according to any one of the preceding claims, further comprising the steps of:
rotating the component (16a, 16b) by 90° so as to frontally and rearly arrange the side faces of the component (16a, 16b) in direction (4);
moving the cutting blade (12) along the first channel (27) for butt-cutting each side face of the component (16a, 16b); and
moving the operating unit (17) along the second channel (28) for finishing each side face of the component (16a, 16b).

7. A method according to claim 6, further comprising the step of:
moving an edging assembly of each side face of the component (16a, 16b) along the second channel (28).

8. A method according to claim 6 or 7 and further comprising the step of:
moving a drilling assembly of each side face of the component (16a, 16b) along the second channel (28).

9. A method according to any one of the preceding claims, further comprising the steps of:
blocking the panel (2) and/or component (16a, 16b) against the supporting plane (P) during the action of the cutting blade (12) and/or operating unit (17); and
releasing the panel (2) and/or component (16a, 16b) from the supporting plane (P) during the movement of the panel (2) and/or component (16a, 16b) in direction (4).

10. A method according to claim 9, and further comprising the steps of:
blocking the panel (2) and/or component (16a, 16b) against the supporting plane (P) by means of a pair of pressing elements (29a, 29b) arranged on the opposite sides of the cutting plane (T) in direction (4); and
independently moving the two pressing elements (29a, 29b), perpendicularly to the supporting plane (P) itself.

11. A method according to claim 10, wherein the cutting machine further comprises a pair of protection bulkheads (30a, 30b), which are arranged on the opposite sides of the pressing elements (29a, 29b) in direction (4), and are adapted to contain the chips and/or processing scraps generated when cutting and processing the panel (2) and/or component (16a, 16b), the method further comprising the step of:
independently moving the protection bulkheads (30a, 30b), perpendicularly to the supporting plane (P).

12. A method according to any one of the preceding claims, further comprising the step of:
inserting ironmongery elements into the panel (2) and/or component (16a, 16b).

13. A method according to any one of the preceding claims, further comprising the step of:
moving the operating unit (17) perpendicularly to the supporting plane (P) between a lowered position, in which the operating unit (17) is arranged underneath the supporting plane (P), and a raised position in which the operating unit (17) protrudes over the supporting plane (P) to process panel (2) and/or component (16a, 16b).
